Europäisches Patentamt

European Patent Office

Office européen des brevets

(19)

(11) Numéro de publication : **0 103 506**
**B1**

(12) **FASCICULE DE BREVET EUROPÉEN**

(45) Date de publication du fascicule du brevet :
28.05.86

(21) Numéro de dépôt : **83401667.7**

(22) Date de dépôt : **17.08.83**

(51) Int. Cl.⁴ : **B 65 B 31/00, F 17 C 13/02,
G 05 D 7/06**

(54) **Procédé et dispositif d'injection d'un gaz liquéfié de pressurisation dans des récipients.**

(30) Priorité : **13.09.82 FR 8215450**

(43) Date de publication de la demande :
**21.03.84 Bulletin 84/12**

(45) Mention de la délivrance du brevet :
**28.05.86 Bulletin 86/22**

(84) Etats contractants désignés :
**AT BE CH DE FR GB IT LI LU NL SE**

(56) Documents cités :
**DE-A- 2 707 004
FR-A- 2 289 392
US-A- 3 366 956**

(73) Titulaire : **L'AIR LIQUIDE, SOCIETE ANONYME POUR
L'ETUDE ET L'EXPLOITATION DES PROCEDES
GEORGES CLAUDE
75, Quai d'Orsay
F-75321 Paris Cedex 07 (FR)**

(72) Inventeur : **Roullet, Alain
10, allée des Feuillantines
F-94800 Villejuif (FR)**

(74) Mandataire : **Jacobson, Claude et al
L'AIR LIQUIDE, SOCIETE ANONYME POUR L'ETUDE
ET L'EXPLOITATION DES PROCEDES GEORGES
CLAUDE 75, quai d'Orsay
F-75321 Paris Cedex 07 (FR)**

EP 0 103 506 B1

Jouve, 18, rue St-Denis, 75001 Paris, France

## Description

L'invention concerne l'injection dans des récipients, par exemple des boîtes métalliques cylindriques, destinés à recevoir un produit ne dégageant pas de gaz par lui-même, par exemple une eau minérale, un gaz liquéfié de pressurisation contenu dans un réservoir muni d'un ajutage pour l'écoulement dudit gaz liquéfié, lesdits récipients étant alignés sur une machine qui, après les avoir remplis, les entraîne, selon la direction d'alignement, sous ledit réservoir de sorte que chacun d'eux reçoit une quantité de gaz liquéfié proportionnelle à la longueur du parcours qu'il a effectué à l'aplomb dudit ajutage.

Les fabricants de récipients, en particulier de boîtes métalliques pour liquides de grande consommation tels que les boissons, ont été amenés, pour des raisons de prix de revient, à utiliser des épaisseurs de matière, en particulier de métal, de plus en plus réduites. Il en résulte une diminution de la résistance de ces récipients et un danger d'écrasement lorsqu'on les empile les uns sur les autres. Si les récipients contenant un produit dégageant un gaz par lui-même, par exemple une boisson carbonatée, résistent relativement bien à l'écrasement il n'en est pas de même pour les récipients renfermant un liquide non gazeux, par exemple une boisson plate telle que l'eau ·minérale, un jus de fruit, etc. On procède dans ce cas à une pressurisation artificielle des récipients, avant le sertissage, par introduction de quelques gouttes de gaz liquéfié, généralement de l'azote, ce qui permet de résoudre le problème de l'écrasement.

Cette technique de pressurisation est appliquée en particulier à des machines à forte cadence, c'est-à-dire capables de remplir 30 000 à 100 000 récipients à l'heure, machines dont le démarrage ne peut être instantané ce qui oblige, pour que les récipients soient pressurisés de façon homogène, à déverser dans chacun d'eux une quantité de gaz liquéfié qui varie en fonction de la vitesse d'avancement de la machine.

Les procédés utilisés jusqu'ici pour faire varier la quantité de gaz liquéfié introduit dans des récipients consistaient soit à faire varier la section utile de l'ajutage soit à ajuster la hauteur de colonne du gaz liquéfié dans le réservoir. Ces procédés se heurtent à des difficultés sérieuses : il est difficile d'agir sur la section de l'ajutage en raison des très basses températures du gaz liquéfié (−196 °C pour l'azote) ; la variation de la hauteur de colonne de gaz liquéfié n'a qu'une faible influence sur le débit puisqu'elle n'agit que par sa racine carrée.

La présente invention a pour but de pallier les inconvénients susmentionnés et propose un procédé dans lequel on fait varier la position de l'ajutage du réservoir relativement à la direction d'alignement des récipients de façon à faire varier la quantité de gaz liquéfié reçue par chaque récipient lors de son passage à l'aplomb de l'ajutage précité.

On peut ainsi régler la pressurisation de chaque récipient sans avoir recours ni à un réglage de la section utile de l'ajutage ni à un réglage de la hauteur de la colonne de gaz liquéfié dans le réservoir, ce qui permet de s'affranchir des inconvénients inhérents à ces procédés.

Selon une autre caractéristique de l'invention, on fait varier la position dudit ajutage en déplaçant le réservoir perpendiculairement à la direction d'alignement des récipients.

La pressurisation de chaque récipient varie donc en fonction de la position de l'ajutage du réservoir ; c'est ainsi que dans le cas de récipients de section cylindrique, le déplacement du jet de gaz liquéfié peut s'effectuer du diamètre dudit récipient à une corde.

Selon encore une autre caractéristique de l'invention, on déplace angulairement le réservoir en le faisant pivoter autour d'un axe horizontal parallèle à ladite direction d'alignement.

Toujours selon l'invention, on asservit la position de l'ajutage, notamment la position angulaire du réservoir, à la vitesse d'avance de la machine.

On peut assurer ainsi une pressurisation constante des récipients même au cours de la séquence de démarrage.

L'invention concerne également, pour la mise en œuvre du procédé précité, un dispositif d'injection dans des récipients, par exemple des boîtes cylindriques, destinés à recevoir un produit ne dégageant pas de gaz par lui-même, par exemple de l'eau minérale, d'un gaz liquéfié de pressurisation contenu dans un réservoir muni d'un ajutage pour l'écoulement dudit gaz liquéfié, les récipients étant alignés sur une machine qui, après les avoir remplis, les entraîne selon la direction d'alignement, caractérisé en ce que l'ajutage du réservoir est mobile relativement à la direction d'alignement des récipients, et en ce qu'il est prévu un organe de commande de la position de cet ajutage.

D'autres caractéristiques et avantages de l'invention apparaîtront au cours de la description qui va suivre.

Dans les dessins annexés donnés à titre d'exemple non limitatif :

la figure 1 est une vue schématique en coupe d'un dispositif selon l'invention muni d'un organe manuel de commande de la position angulaire du réservoir, et

la figure 2 est une vue de dessus du dispositif muni d'un organe de commande automatique de la position angulaire dudit réservoir.

Selon le mode de réalisation représenté, un réservoir calorifugé 1, ouvert à sa partie supérieure et contenant de l'azote liquéfié $LN_2$, est muni, au voisinage de ladite partie supérieure, de tourillons 2 qui lui permettent d'osciller autour d'un axe XX' et, à sa partie inférieure, d'un ajutage 3 pour l'écoulement de l'azote liquéfié.

Un conduit d'alimentation 4 et un organe de contrôle 5 formé d'un thermocouple et d'une résistance chauffante permettent de maintenir constant, ceci de façon connue, le niveau d'azote dans le réservoir. Les récipients 6, constitués par des boîtes métalliques de section circulaire, en contact les uns avec les autres et contenant un liquide L, sont disposés en alignement rectiligne sur une machine indiquée schématiquement en 7 qui les entraîne selon leur direction d'alignement F. Le réservoir 1 est orienté de façon que son axe de pivotement XX' soit parallèle à la direction F, ce pivotement étant assuré par un organe de commande constitué par une vis 8 disposée perpendiculairement à XX' et dont l'extrémité 8a vient au contact de la partie inférieure du réservoir 1, cette vis étant engagée dans un écrou fixe 9 monté sur un bloc 10 de sorte que lorsqu'elle est entraînée en rotation, elle fait osciller le réservoir 1 autour de son axe XX'.

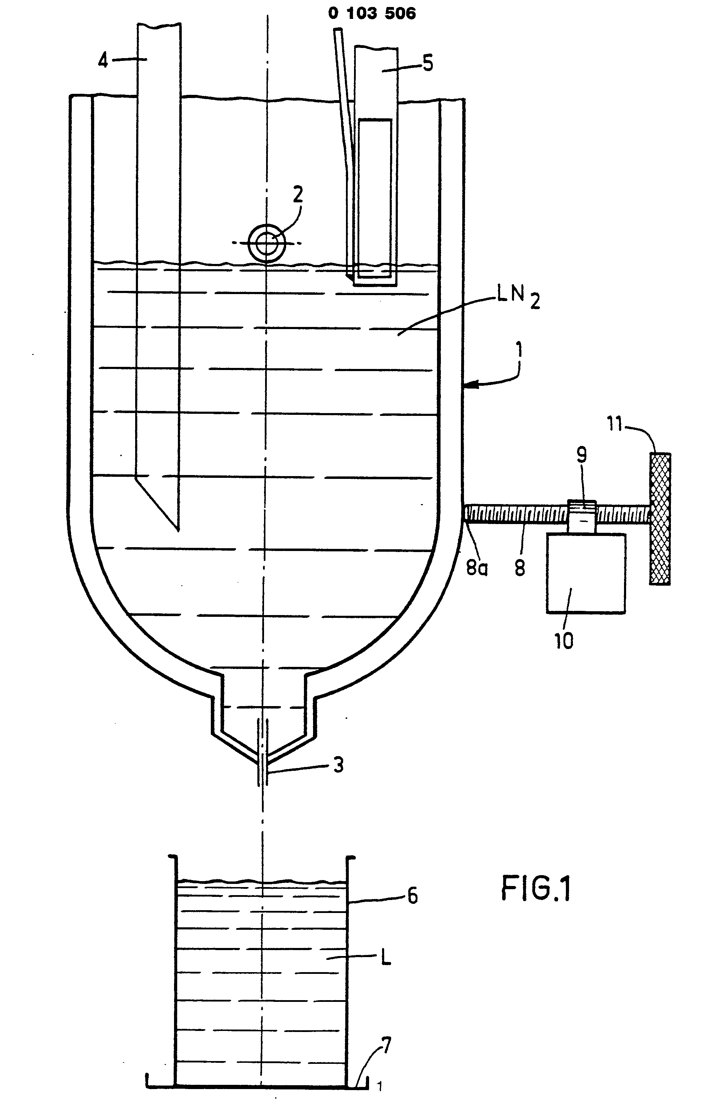

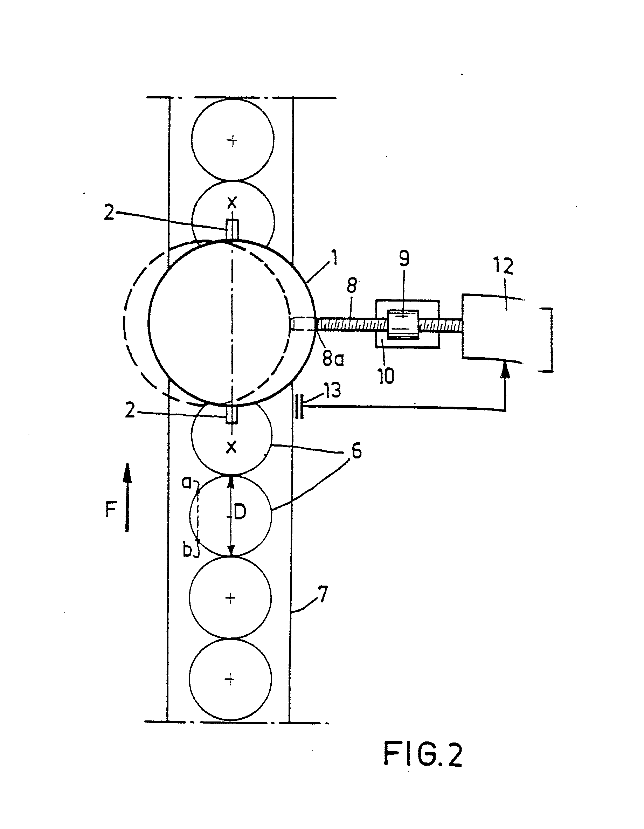

Dans le cas de la figure 1, cet entraînement est réalisé manuellement, la vis étant munie, à cet effet, d'un bouton moleté 11, tandis que dans le cas de la figure 2, cet entraînement est effectué de façon automatique à l'aide d'un moteur 12 commandé par un détecteur de vitesse 13 sensible à la vitesse d'avance de la machine 7, de sorte que la position angulaire du réservoir est asservie à cette vitesse d'avance. On a représenté à la figure 2 deux positions de la vis 8 et deux positions angulaires du réservoir 1, l'une en traits pleins, l'autre en pointillés.

On voit, en se référant à la figure 2, que lorsque le réservoir est vertical (position en traits pleins), chaque récipient 6 effectue, sous l'ajutage 3, un parcours qui correspond à son diamètre D et reçoit donc une quantité d'azote liquide proportionnelle à ce diamètre, tandis que lorsque le réservoir est incliné (position en pointillés), chaque récipient effectue, sous l'ajutage 3, un parcours correspondant à une corde a b, c'est-à-dire un parcours plus petit, de sorte qu'il reçoit une quantité d'azote liquide moins importante. On peut ainsi régler la quantité d'azote liquide reçue par chaque récipient par la position angulaire du réservoir 1.

On peut, bien entendu, concevoir divers types de systèmes d'asservissement automatique tels que des vérins pneumatiques ou électriques commandés par divers types de détecteurs de vitesse ou de palpeurs de positionnement.

On peut également prévoir, au lieu d'un réservoir basculant, un réservoir mobile en translation, par exemple perpendiculairement à la direction d'entraînement F des récipients.

Le domaine d'application de l'invention s'étend non seulement aux récipients de section cylindrique, mais à des récipients pouvant avoir une section autre, par exemple elliptique ou hexagonale, et qui peuvent être en contact ou alignés avec un interstice entre deux récipients successifs. L'invention permet également l'utilisation d'azote liquide pour inerter le ciel gazeux de réservoirs, par exemple de boîtes de conserve contenant un produit solide.

**Revendications**

1. Procédé pour injecter dans des récipients (6), par exemple des boîtes cylindriques, destinés à recevoir un produit ne dégageant pas de gaz par lui-même, par exemple une eau minérale, un gaz liquéfié de pressurisation contenu dans un réservoir (1) muni d'un ajutage (3) pour l'écoulement dudit gaz liquéfié, les récipients (6) étant alignés sur une machine (7) qui, après les avoir remplis, les entraîne, selon la direction d'alignement (F), sous ledit réservoir (1) de sorte que chacun d'eux reçoit une quantité de gaz liquéfié proportionnelle à la longueur du parcours qu'il a effectué à l'aplomb dudit ajutage (3), caractérisé en ce que l'on fait varier la position de l'ajutage (3) du réservoir (1) relativement à la direction d'alignement (F) de façon à faire varier la quantité de gaz liquéfié reçue par chaque récipient (6) lors de son passage à l'aplomb dudit ajutage (3).

2. Procédé selon la revendication 1, caractérisé en ce que l'on fait varier la position de l'ajutage (3) du réservoir (1) en déplaçant le réservoir perpendiculairement à la direction d'alignement des récipients (6).

3. Procédé selon la revendication 2, caractérisé en ce que l'on déplace angulairement le réservoir (1) en le faisant pivoter autour d'un axe horizontal (XX') parallèle à ladite direction d'alignement (F).

4. Procédé selon l'une quelconque des revendications 1 à 3, caractérisé en ce que l'on asservit la position de l'ajutage (3) du réservoir (1) à la vitesse d'avance de la machine (7).

5. Dispositif d'injection dans des récipients (6), par exemple des boîtes cylindriques, destinés à recevoir un produit ne dégageant pas de gaz par lui-même, par exemple de l'eau minérale, d'un gaz liquéfié de pressurisation contenu dans un réservoir (1) muni d'un ajutage (3) pour l'écoulement dudit gaz liquéfié, les récipients (6) étant alignés sur une machine (7) qui, après les avoir remplis, les entraîne sous le réservoir selon la direction d'alignement (F), caractérisé en ce que l'ajutage (3) du réservoir est mobile relativement à la direction d'alignement (F) des récipients (6), et en ce qu'il est prévu un organe (8) de commande de la position de cet ajutage.

6. Dispositif selon la revendication 5, caractérisé en ce que le réservoir est mobile en translation perpendiculairement à ladite direction d'alignement (F).

7. Dispositif selon la revendication 5, caractérisé en ce que le réservoir (1) est monté oscillant sur des tourillons (2) dont l'axe (XX') est parallèle à la direction d'alignement (F) des récipients (6).

8. Dispositif selon l'une quelconque des revendications 5 à 7, caractérisé en ce que ledit organe de commande (8) est constitué par une vis engagée dans un écrou fixe (9) et attaquant le réservoir (1).

9. Dispositif selon la revendication 8, caractérisé en ce que la vis (8) est manœuvrable à la main.

10. Dispositif selon la revendication 8, caractérisé en ce que la vis (8) est actionnée par un moteur (12) asservi à la vitesse d'avance de la machine (7).

## Claims

1. Process for injecting a liquified gas for pressurizing into containers (6), for example cylindrical cans, intended to receive a product not releasing gas by itself, for example mineral water, the liquified gas for pressurizing being contained in a reservoir (1) equipped with a nozzle (3) for the discharge of the said liquified gas, the containers (6) being aligned on a machine (7) which, after filling the containers, drives the containers in the direction of alignment (F), under the said reservoir (1) such that each thereof receives a quantity of liquified gas proportional to the length of the path which it has moved under the said nozzle (3), characterized in that one causes to vary the position of the nozzle (3) of the reservoir (1) relative to the direction of alignment (F) in order to cause to vary the quantity of liquified gas which is received by each container (6) during the passage thereof under the said nozzle (3).

2. Process according to claim 1, characterized in that one causes the position of the nozzle (3) of the reservoir (1) to vary by displacing the reservoir perpendicularly to the direction of alignment of the containers (6).

3. Process according to claim 2, characterized in that one displaces angularly the reservoir (1) by causing it to pivot about a horizontal axis (XX') parallel to the said direction of alignment (F).

4. Process according to one of the claims 1 to 3, characterized in that the position of the nozzle (3) of the reservoir (1) is controlled by the speed of advance of the machine (7).

5. Device for injecting liquified gas for pressurizing into containers (6), for example cylindrical cans, intended to receive a product not releasing gas by itself, for example mineral water, the liquified gas for pressurizing being contained in a reservoir (1) equipped with a nozzle (3) for the discharge of the liquified gas, the containers (6) being aligned on a machine (7) which, after having filled the containers, drives the containers under the reservoir along the direction of alignment (F), characterized in that the nozzle (3) of the reservoir is movable relative to the direction of alignment (F) of the containers (6), and that a control element (8) for the position of the said nozzle is provided.

6. Device according to claim 5, characterized in that the reservoir is rectilinearly movable perpendicularly to the said direction of alignment (F).

7. Device according to claim 5, characterized in that the reservoir (1) is mounted to oscillate on supporting pins (2) the axis (XX') of which is parallel to the direction of alignment (F) of the containers (6).

8. Device according to one of the claims 5 to 7, characterized in that the said control element (8) is formed by a screw bolt engaged in a fixed nut (9) and engaging the reservoir (1).

9. Device according to claim 8, characterized in that the ·screw bolt (8) is capable of being actuated manually.

10. Device according to claim 8, characterized in that the said screw bolt (8) is actuated by a motor (12) controlled by the speed of advance of the machine (7).

## Patentansprüche

1. Verfahren zum Einspritzen von Flüssiggas zum Unterdrucksetzen in Behälter (6), z. B. zylindrische Dosen, zur Aufnahme eines Produktes, welches nicht selbst Gas freisetzt, beispielsweise Mineralwasser, wobei das Flüssiggas zum Unterdrucksetzen in einem Speicher (1) enthalten ist, der mit einem Anschlußstutzen (3) zum Abfließen des Flüssiggases ausgestattet ist, und wobei die Behälter (6) auf einer Maschine (7) ausgerichtet sind, welche nach dem Füllen der Behälter diese in Ausfluchtungsrichtung (F) unter dem Speicher (1) derart mitführt, daß jeder Behälter eine Flüssiggasmenge aufnimmt, die proportional zur Länge des Durchlaufes ist, den der Behälter senkrecht zum Anschlußstutzen (3) durchlaufen hat, dadurch gekennzeichnet, daß die Position des Anschlußstutzens (3) des Speichers (1) relativ zur Ausfluchtungsrichtung (F) derart verändert wird, daß die Menge des von jedem Behälter (6) während seines Durchganges senkrecht zum Anschlußstutzen (3) aufgenommenen Flüssiggases verändert wird.

2. Verfahren nach Anspruch 1, dadurch gekennzeichnet, daß die Position des Anschlußstutzens (3) des Speichers (1) dadurch verändert wird, daß der Speicher senkrecht zur Ausfluchtungsrichtung der Behälter (6) verschoben wird.

3. Verfahren nach Anspruch 2, dadurch gekennzeichnet, daß der Speicher (1) dadurch im Winkel verlagert wird, daß er zum Drehen um eine Horizontalachse (XX'), die zur Ausfluchtungsrichtung (F) parallel ist, veranlaßt wird.

4. Verfahren nach einem der Ansprüche 1 bis 3, dadurch gekennzeichnet, daß die Position des Anschlußstutzens (3) des Speichers (1) auf die Vorlaufgeschwindigkeit der Maschine (7) eingesteuert wird.

5. Vorrichtung zum Einspritzen eines Flüssiggases zum Unterdrucksetzen in Behälter (6), z. B. zylindrische Dosen, zur Aufnahme eines nicht selbst Gas freisetzenden Produktes, z. B. Mineralwasser, wobei das Flüssiggas zum Unterdrucksetzen in einem Speicher (1) enthalten ist, der mit einem Anschlußstutzen (3) zum Abfließen des Flüssiggases ausgestattet ist, und wobei die Behälter (6) auf einer Maschine (7) ausgerichtet sind, welche nach dem Füllen der Behälter diese unter dem Speicher in Ausfluchtungsrichtung (F) mitnimmt, dadurch gekennzeichnet, daß der Anschlußstutzen (3) des Speichers relativ zur Ausfluchtungsrichtung (F) der Behälter (6) beweglich ist und daß ein Steuerorgan (8) für die Position dieses Anschlußstutzens vorgesehen ist.

6. Vorrichtung nach Anspruch 5, dadurch gekennzeichnet, daß der Speicher senkrecht zu der Ausfluchtungsrichtung (F) translatorisch bzw. geradlinig beweglich ist.

7. Vorrichtung nach Anspruch 5, dadurch gekennzeichnet, daß der Speicher (1) auf Lagerzapfen (2) schwingend angebracht ist, deren Achse (XX') parallel zur Ausfluchtungsrichtung (F) der Behälter (6) liegt.

8. Vorrichtung nach einem der Ansprüche 5 bis 7, dadurch gekennzeichnet, daß das Steuerorgan (8) aus einer Schraube aufgebaut ist, die in einer festen Mutter (9) in Eingriff steht und den Speicher (1) angreift.

9. Vorrichtung nach Anspruch 8, dadurch gekennzeichnet, daß die Schraube (8) von Hand betätigbar ist.

10. Vorrichtung nach Anspruch 8, dadurch gekennzeichnet, daß die Schraube (8) durch einen Motor (12) betätigbar ist, der auf die Vorlaufgeschwindigkeit der Maschine (7) eingeregelt ist.

0 103 506

FIG.1

FIG.2